# EUROPÄISCHE PATENTANMELDUNG

(11) **EP 2 453 214 A1**
(43) Veröffentlichungstag der Anmeldung: **16.05.2012**
(21) Anmeldenummer: 11008904.2
(22) Anmeldetag: 09.11.2011
(51) Int. Cl.: G01F 1/68

(54) **Durchflusssensor zum Einsetzen in eine Messstrecke**

(30) Priorität: 16.11.2010 DE 102010051592; 18.12.2010 DE 102010055115
(71) Anmelder: Hydrometer GmbH, 91522 Ansbach (DE)
(72) Erfinder: Sonnenberg, Hans-Michael, 91522 Ansbach (DE); Hegendörfer, Andreas, 90617 Puschendorf (DE)
(74) Vertreter: Diehl Patentabteilung

(57) **Zusammenfassung**

Durchflusssensor zum Einsetzen in eine Messstrecke zur Erfassung eines in der Messstrecke geführten Fluidflusses, umfassend ein Sensorbauteil (2) mit einem ersten Bauteilabschnitt (5), der eine der Querschnittsform der Messstrecke entsprechende, vorzugsweise runde Form besitzt und mehrere einzelne das Fluid führende Kanäle (9, 9a) aufweist, sowie wenigstens einen Sensorträger (12) nebst Sensor (13), wobei der Sensor (13) einem Messkanal (14) zugeordnet ist, der in Verbindung mit einem am Sensorbauteil (2) ausgebildeten Kanal (9a) steht, wobei die Fluideintrittsfläche (7) des ersten Bauteilabschnitts (2) in der Montagestellung senkrecht zur Fluidströmungsrichtung steht.

## Beschreibung

Die Erfindung betrifft einen Durchflusssensor zum Einsetzen in eine Messstrecke zur Erfassung eines in der Messstrecke geführten Fluidflusses.

Die Genauigkeit von Verbrauchsmessungen fluider Medien spielt für die Exaktheit der Verbrauchsabrechung eine immer größere Rolle. Im Gaszählerbereich kommen zur Strömungsmessung auch thermische Sensoren zum Einsatz. Üblicherweise ist bei bekannten Zähleinrichtungen, siehe hierzu beispielsweise WO 2004/092687 A1, in eine Hauptleitung ein Differenzdruckerzeuger eingesetzt, der den Leitungsquerschnitt ausfüllend eine Vielzahl separater, den Differenzdruckerzeuger längs durchlaufender Kanäle aufweist, durch die das Gas strömt. Da über den Differenzdruckerzeuger der Strömungsquerschnitt der Hauptleitung reduziert wird, kommt es zwangsläufig zu einer Differenzdruckerzeugung.

Vor dem Differenzdruckerzeuger zweigt von der Hauptgasleitung eine Bypassleitung ab, die hinter dem Differenzdruckerzeuger wieder in die Hauptgasleitung mündet. In dieser Bypassleitung ist der thermische Sensor zur Strömungsmessung angeordnet. Zur Messung wird vom in der Hauptgasleitung strömenden Hauptgasstrom ein kleinerer Bypassgasstrom abgezweigt, der über den thermischen Sensor geführt wird. Der Sensor misst die Bypassgasströmung. Aus dem Abzweigungsverhältnis, das heißt dem Verhältnis der Volumenflüsse Hauptgasstrom zu Bypassgasstrom, wird schließlich der gesamte Durchfluss ermittelt, wobei das Verhältnis im Wesentlichen durch das Differenzdruckmittel vorgegeben wird.

Untersuchungen haben ergeben, dass bei einer derartigen Kanal- oder Leitungskonfiguration Messungenauigkeiten auftreten. Diese resultieren aus der Strömungsteilung, die zu Störmungsungleichförmigkeiten führt. So ist aufgrund der Abzweigung des Bypasskanals kein gleichmäßiges Strömungsverhalten über einen hohen Durchflussbereich gegeben, auch machen sich Einflüsse von Strömungsstörungen im Bereich des seitlichen Abzweigs zum Bypasskanal nachteilig bemerkbar.

Aus der EP 1 041 367 A1 ist nun ein Durchflussmesser für Gas bekannt, bei welchem ein Regulatorsieb mit länglich ausgebildeten Kanälen in die Gasleitung eingesetzt und in zwei äußerste Kanäle des Regulatorsiebs durch Öffnungen der Gasleitung hindurch Sensorelemente zur Messung des Gasflusses in den entsprechenden Kanälen eingeführt werden. Dieser Durchflusssensor wird somit erst beim Einbau in die Gasleitung zusammengebaut, so dass die Kalibrierung und das Testen des Durchflusssensors erst nach dem fertigen Einbau in die Gasleitung möglich ist.

Der Erfindung liegt das Problem zugrunde, eine Möglichkeit anzugeben, die eine Durchflussmessung eines Gases über einen hohen Durchflussbereich mit gleichmäßigen Strömungsverhältnissen über die Messstrecke ermöglicht.

Zur Lösung dieses Problems ist erfindungsgemäß ein Durchflusssensor zum Einsetzen in eine Messstrecke zur Erfassung eines in der Messstrecke geführten Fluidflusses vorgesehen, umfassend ein Sensorbauteil mit einem ersten Bauteilabschnitt, der eine der Querschnittsform der Messtrecke entsprechende, vorzugsweise runde Form besitzt und mehrere einzelne das Fluid führende Kanäle aufweist, sowie wenigstens einen Sensorträger nebst mindestens einem Sensor, wobei der Sensor einem Messkanal zugeordnet ist, der in Verbindung mit einem vom Sensorbauteil ausgebildeten Kanal steht, wobei die Fluideintrittsfläche des ersten Bauteilabschnitts in der Montagestellung senkrecht zur Fluidströmungsrichtung steht.

Der erfindungsgemäße Durchflusssensor stellt gewissermaßen ein Kombinations- oder Hybridbauteil dar, das die Funktionalität eines Sensors und eines Differenzdruckerzeugers in einem einzigen Bauteil vereint. Das erfindungsgemäß vorgesehene Sensorbauteil besitzt einen ersten Bauteilabschnitt, dessen Querschnittsform der in der Regel rohrförmigen Messstrecke entspricht. Dieser erste Bauteilabschnitt schließt in der Montagestellung den Strömungsquerschnitt der Messstrecke, das anströmende Fluid kann lediglich durch die an diesem Bauteilabschnitt ausgebildeten Kanäle weiter strömen. Dieser Bauteilabschnitt besitzt also die Funktion eines Differenzdruckerzeugers. Gleichzeitig befindet sich am Sensorbauteil aber auch ein Sensorträger nebst Sensor, beispielsweise einem thermischen Sensor. Dieser Sensor ist einem Messkanal zugeordnet, der am Durchflusssensor vorgesehen ist. Dieser Messkanal wiederum steht in unmittelbarer Strömungsverbindung mit einem am ersten Bauteilabschnitt ausgebildeten Kanal, das heißt, dass dieser Kanal in den Messkanal mündet, sodass über diesen Kanal anströmendes Fluid im Messkanal zum Sensor gelangt.

Wesentlich ist hierbei, dass die vorzugsweise ebene Fluideintrittsfläche des ersten Bauteilabschnitts, also die Anströmfläche, gegen die das anströmende Gas strömt, in der

Montagestellung senkrecht zur Fluidströmung steht. Das heißt wiederum, dass die Eintrittsöffnung aller Kanäle des ersten Bauteilabschnitts folglich in derselben Ebene liegen. Nachdem ein Kanal in die Messstrecke mündet, folgt hieraus auch, dass damit zwangsläufig auch dieser Zugangskanal zur Messstrecke in derselben Ebene wie die anderen Kanäle, die den Hauptgasstrom weiterführen, liegt. Der wenigstens eine Messkanal befindet sich dabei bevorzugt in axialer Verlängerung des am ersten Bauteil ausgebildeten Kanals, sodass er in gerader, axialer Verlängerung den Kanal fortsetzt. Der Abgriff der Messströmung in derselben Ebene wie die Zuleitung des Hauptgasstroms in die sonstigen weiterführenden Kanäle bewirkt mit besonderem Vorteil, dass sich gleiche Strömungsverhältnisse in den Kanälen einstellen, wobei diese gleichmäßigen Strömungsverhältnisse auch über einen extrem hohen Durchfluss beibehalten werden. Dies gilt insbesondere, wenn, wie erfindungsgemäß ferner vorgesehen ist, die Querschnittsfläche und/oder die Querschnittsform aller Kanäle im Wesentlichen gleich ist. Das heißt, dass letztlich das im Messkanal gemessene Volumen identisch zu jedem Einzelvolumen, das durch einen der anderen Kanäle strömt, ist, sodass aus dem Messergebnis im Messkanal ohne Weiteres und mit äußerster Genauigkeit das gesamte Volumen ermittelt werden kann. Sind unterschiedliche Querschnittsflächen gegeben, so kann die genaue Volumenberechnung anhand der bekannten Flächenverhältnisse erfolgen.

Insgesamt stellt der erfindungsgemäße Durchflusssensor folglich ein Kombinations- oder Hybridbauteil dar, das mit besonderem Vorteil die Differenzdruckerzeugungs- und Messfunktion vereint. Dies führt dazu, dass einerseits aufwändige Bypassabzweigungen, die mitunter auch entsprechende Zusatzkanalauslegungen und Ähnliches erfordern, nicht vorzusehen sind. Auch sind keine unterschiedlichen Bauteile, nämlich Sensor und Differenzdruckerzeuger, vorzusehen. Vielmehr ist es ausreichend, den erfindungsgemäßen Durchflusssensor in die Messstrecke, also beispielsweise ein Gasrohr eines Gaszählers, zu integrieren.

Wie beschrieben ist dem Sensorbauteil ein Sensorträger nebst Sensor zugeordnet, wobei der Sensor mit einem Messkanal zusammenwirkt respektive an oder in einem solchen zur Messung des Gasdurchflusses angeordnet ist. Zur Festlegung des Sensors respektive des Sensorträgers am Sensorbauteil ist gemäß der Erfindung am ersten Sensorbauteil ein zweites Sensorbauteil angeordnet, wobei der Sensorträger an einem der Sensorbauteile oder zwischen beiden Sensorbauteilen angeordnet ist. Der Sensorträger, beispielsweise eine geeignete Platine oder Ähnliches, nebst Sensor kann gemäß der Erfindung also entweder am ersten Sensorbauteil befestigt sein, er kann am zweiten Sensorbauteil befestigt sein, oder er kann, gegebenenfalls unmittelbar nicht befestigt, zwischen beiden angeordnet bzw. aufgenommen sein. Seine Ausrichtung, das heißt, wie nun konkret der Sensor positioniert ist, richtet sich danach, wie respektive wo der eigentliche Messkanal realisiert ist. Befindet sich der Messkanal am ersten Sensorbauteil, so ist der Sensor zu diesem zu orientieren, befindet er sich am zweiten Sensorbauteil, so ist der Sensor in entsprechender anderer Lage zu montieren.

Zur Anordnung des Sensorträgers nebst Sensor wie auch des zweiten Sensorbauteils am ersten Sensorbauteil ist gemäß einer zweckmäßigen Weiterbildung der Erfindung vorgesehen, dass sich vom ersten Bauteilabschnitt des ersten Sensorbauteils im Wesentlichen senkrecht dazu ein zweiter Bauteilabschnitt erstreckt, an dem das zweite Sensorbauteil befestigt ist. Dieser vom ersten Bauteilabschnitt abstehende zweite Bauteilabschnitt bildet folglich die Anordnungsfläche respektive den Anordnungsbereich für den Sensorträger und das zweite Sensorbauteil. Die Geometrie dieses zweiten Bauteilabschnitts kann, da er dem ersten Bauteilabschnitt nachgeschaltet ist, verschiedenartig sein, beispielsweise als ebenflächiger, abstehender Vorsprung oder Ähnliches, worauf nachfolgend noch eingegangen wird.

In Weiterbildung der Erfindung kann vorgesehen sein, dass der Sensorträger zusammen mit dem am ersten Sensorbauteil befestigten zweiten Sensorbauteil zumindest abschnittsweise den wenigstens einen Messkanal begrenzt. Das heißt, dass dem Sensorträger und dem zweiten Sensorbauteil nicht nur die Funktion der Halterung des Sensors respektive der Halterung des Sensorträgers zukommen, sondern auch die Funktion der Abgrenzung des Messkanals. Der Messkanal kann beispielsweise als zur einen Seite hin offener Kanal am zweiten Bauteilabschnitt vorgesehen sein, der nach Befestigen des Sensorträgers und des zweiten Sensorbauteils abgedeckt, also seitlich geschlossen wird. Dabei können auch mehrere Messkanäle vorgesehen sein, wenn unter Verwendung mehrerer Sensoren beispielsweise Redundanzmessungen durchgeführt werden sollen oder Ähnliches. Diese mehreren Messkanäle können ebenfalls jeweils über einen separaten Sensorträger und das zweite Sensorbauteil begrenzt sein, das heißt, dass jedem Messkanal ein separater Sensorträger nebst Sensor zugeordnet ist, die dann aber gemeinsam über das zweite Sensorbauteil fixiert bzw. übergriffen sind. Alternativ können die mehreren Messkanäle auch über einen gemeinsamen Sensorträger und das zweite Sensorbauteil begrenzt sein.

Zur Anordnung des Sensorträgers kann in Weiterbildung der Erfindung eine Aufnahme am ersten oder am zweiten Bauteilabschnitt vorgesehen sein, je nachdem, an welchem Bauteil der Sensorträger festzulegen ist. Diese Aufnahme ist derart ausgestaltet, dass der Sensorträger mit seiner den Messkanal begrenzenden Fläche zum jeweils anderen Sensorbauteil, also entweder zum zweiten oder zum ersten Sensorbauteil weisend anbringbar ist. Auch hier ist die Anordnung des Messkanals, der bevorzugt an ersten oder zweiten Bauteilabschnitt unmittelbar beispielsweise als ein nutförmiger, nach oben offener Kanal ausgebildet ist, in Verlängerung des am ersten Bauteilabschnitt vorgesehenen Einströmkanals angeordnet.

Hinsichtlich der Geometrie des zweiten Sensorbauteils sind unterschiedliche Ausgestaltungen denkbar. Nach einer ersten Erfindungsalternative kann das zweite Sensorbauteil im Wesentlichen plattenförmig ausgebildet sein. Besitzt, wie zweckmäßigerweise vorgesehen, der ersten Bauteilabschnitt eine ebene Fläche, so kann auf dieser das zweite Sensorbauteil unter Zwischenordnung des Sensorträgers auf einfache Weise in Form einer Abdeckplatte montiert werden.

Eine besonders vorteilhafte Weiterbildung der Erfindung sieht vor, dass sich das zweite Sensorbauteil und das erste Sensorbauteil in der Montagestellung zu einer geschlossenen, der Querschnittsform der Messstrecke entsprechenden Form ergänzen, wobei beim zweiten Sensorbauteil die am ersten Bauteilabschnitt vorgesehenen Kanäle weiterführende Kanäle ausgebildet sind. Das heißt, dass sich die beiden Sensorbauteile zu einer zylindrischen Form ergänzen, mithin also über eine axiale Länge eine kontinuierliche, zylindrische Form besitzen und die querschnittlich ebenfalls zylindrische Messstrecke schließen. Auch andere Querschnittsformen, z. B. quadratisch oder sechs- oder mehreckig, sind denkbar. Um den Durchfluss des Hauptgasstroms zu ermöglichen, sind am zweiten Sensorbauteil entsprechende weiterführende Kanäle ausgebildet, die unmittelbar mit den Kanälen am ersten Bauteilabschnitt kommunizieren. Bevorzugt verlaufen alle Kanäle achsparallel. Die jeweilige Kanalanzahl und Kanalgeometrie ist selbstverständlich gleich.

Beispielsweise ist es denkbar, beide Sensorbauteile querschnittlich gesehen L-förmig auszuführen. Am ersten Sensorbauteil ist der erste Bauteilabschnitt vorgesehen, an dem der zweite Bauteilabschnitt, querschnittlich beispielsweise halbkreisförmig, vorspringt. Umgekehrt konfiguriert ist das zweite Sensorbauteil. An diesem ist ebenfalls ein entsprechender radial abstehender Bauteilabschnitt vorgesehen, von dem ebenfalls ein querschnittlich gesehen halbkreisförmiger weiterer Bauteilabschnitt axial absteht. Diese beiden L-förmigen Bauteile können sodann, eine geschlossene Form, z. B. eine Zylinderform bildend, aneinander gelegt werden, wobei selbstverständlich die entsprechenden Kanäle einander ergänzen.

Hinsichtlich der Positionierung des Messkanals wie auch des Kanals am ersten Bauteilabschnitt, der in den Messkanal übergeht, sind zwei unterschiedliche Ausgestaltungen denkbar. So kann bei einer ersten Erfindungsalternative am ersten Bauteilabschnitt in gitterartiger Anordnung eine Vielzahl von Kanälen vorgesehen sein, wobei der Kanal, der in den Messkanal übergeht, als einzelner Kanal unmittelbar benachbart zum zweiten Bauteilabschnitt verläuft. Hier ist also ein einzelner, randseitig angeordneter Kanal vorgesehen, der in den Messkanal übergeht. Dieser Messkanal verläuft zwangsläufig ebenfalls randseitig relativ gesehen zur Längserstreckung des Durchflusssensors, das heißt, er befindet sich nahe an der Messstreckenwand.

Alternativ dazu kann vorgesehen sein, dass am ersten Bauteilabschnitt eine Vielzahl einzelner Kanäle, in vorzugsweise symmetrischer Verteilung, um die Mitte des ersten Bauteilabschnitts angeordnet sind, und dass der in den Messkanal übergehende Kanal in der Mitte angeordnet ist. Hier befindet sich dann zwangsläufig auch der Messkanal mittig, er liegt also in der Längsachse des Durchflusssensors.

Wie bereits einleitend beschrieben, kann erfindungsgemäß ferner die Querschnittsfläche und/oder die Querschnittsform aller Kanäle im Wesentlichen gleich sein. Bevorzugt sind die Kanalquerschnitte rund. Jedoch ist es auch denkbar, dass der in den Messkanal übergehende Kanal wie auch der Messkanal selbst querschnittlich gesehen rechteckig oder quadratisch sind, was aus fertigungstechnischen Gründen einfacher ist, während die anderen Kanäle querschnittlich rund sind. Die Querschnittsfläche kann weitestgehend gleich sein, muss aber nicht.

Die Länge und der Querschnitt der Kanäle sollte erfindungsgemäß derart bemessen sein, dass sich ein laminares Strömungsprofil ausbildet.

Ferner kann vorgesehen sein, dass der Fluideintrittsfläche eine umlaufende Aufnahme für ein Dichtelement oder ein in einer solchen Aufnahme angeordnetes Dichtelement zugeordnet ist. Das Dichtelement, z.B. ein in einer Nut aufgenommener Dichtring, dichtet zur Messstreckenwand hin ab, so dass kein zu vermessendes Medium vorbeiströmen kann. Die Abdichtung kann radial erfolgen, wenn der Durchflusssensor in die Messstrecke eingeschoben ist, sie kann aber auch axial erfolgen, z.B. wenn das die Messstrecke aufweisende Rohr einen Absatz aufweist, gegen den das Dichtelement dann axial abdichtet. Die Aufnahme kann, gegebenenfalls je nach Dichtrichtung, z.B. als Radialnut für ein Radialdichtelement oder als in der Fluideintrittsfläche umlaufende Axialnut für ein sich radial erstreckendes Axialdichtelement ausgeführt sdin. Die Fixierung des Dichtelements (Dichtring, Dichtscheibe o.dgl.) kann über eine beliebige Verbindungstechnik erfolgen, z.B. Pressen oder Kleben.

Weitere Vorteile, Merkmale und Einzelheiten der Erfindung ergeben sich aus den im Folgenden beschriebenen Ausführungsbeispielen sowie anhand der Zeichnung. Dabei zeigen:
- Fig. 1: eine Perspektivansicht eines erfindungsgemäßen Durchflusssensors einer ersten Ausführungsform,
- Fig. 2: eine gedrehte Perspektivansicht des Durchflusssensors aus Fig. 1,
- Fig. 3: eine Perspektivansicht eines ersten Sensorbauteils eines erfindungsgemäßen Durchflusssensors einer zweiten Ausführungsform,
- Fig. 4: eine Perspektivansicht des zweiten Sensorbauteils der erfindungsgemäßen zweiten Ausführungsform des Durchflusssensors,
- Fig. 5: der erfindungsgemäße Durchflusssensor der zweiten Ausführungsform mit zusammengesetztem erstem und zweitem Sensorbauteile,
- Fig. 6: eine Schnittansicht durch den Durchflusssensor aus Fig. 5,
- Fig. 7: eine Perspektivansicht eines ersten Sensorbauteils für einen Durchflusssensor der zweiten Ausführungsform gemäß einer zweiten Ausgestaltungsmöglichkeit, und
- Fig. 8: eine Schnittansicht durch einen Durchflusssensor einer dritten Ausführungsform.

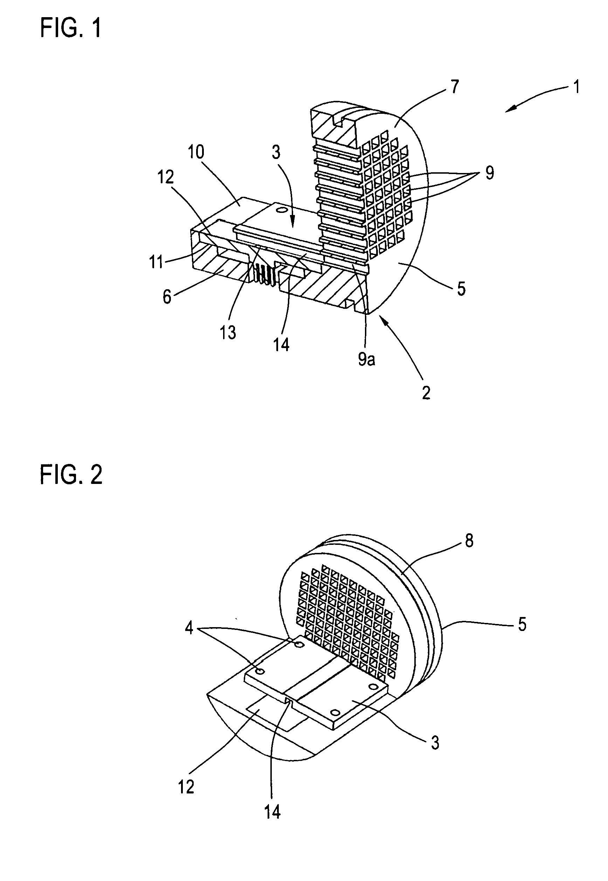

Fig. 1 zeigt einen erfindungsgemäßen Durchflusssensor 1 einer ersten Ausführungsform. Dieser umfasst ein erstes Sensorbauteil 2 sowie ein zweites Sensorbauteil 3, das hier plattenförmig ausgeführt ist und über geeignete Verbindungsmittel 4 am ersten Sensorbauteil 2 befestigt ist.

Das erste Sensorbauteil 2 besteht aus zwei unterscheidbaren Abschnitten, nämlich einem ersten Bauteilabschnitt 5 und einem sich davon im Wesentlichen senkrecht wegerstreckenden zweiten Bauteilabschnitt 6. Der erste Bauteilabschnitt 5 ist, siehe die Fig. 1 und 2, im Querschnitt rund, er hat also eine scheibenförmige Ausgestaltung und weist eine vordere, ebene Anströmfläche 7 auf. An seiner äußeren Mantelfläche ist eine umlaufende Nut 8 vorgesehen, in die ein Dichtelement wie ein Dichtring eingesetzt werden kann. Die Dimensionierung sowie die Geometrie dieses ersten Bauteilabschnitts 5 entspricht der Querschnittsform der Messstrecke, in die der Durchflusssensor 1 eingesetzt werden soll. Die Messstrecke, in der Regel ein Rohr, ist die Strecke, durch die das gesamte zu messende Gasvolumen strömt, mithin also die zentrale Hauptgasleitung, die beispielsweise durch einen Gaszähler führt respektive ein entsprechender Rohrabschnitt, durch den das gesamte, in einen Gaszähler geführte Gas zwangsläufig strömen muss.

Der erste Bauteilabschnitt 5 weist, siehe die Fig. 1 und 2, eine Vielzahl einzelner, in ihrer Geometrie wie auch im Querschnitt gleicher Kanäle 9 auf, die in gitterartiger Anordnung ausgebildet sind und parallel verlaufend den ersten Bauteilabschnitt durchsetzen. Wenngleich hier eine viereckige Kanalgeometrie gezeigt ist, können die Kanäle selbstverständlich auch rund sein. Auch kann die Anzahl der Kanäle letztlich beliebig sein, wie auch der jeweilige Kanalquerschnitt. Wichtig ist, dass hinreichend Gas hierüber passieren kann, dass aber dennoch eine ausreichende Druckdifferenz vor und hinter dem Durchflusssensor hierüber erzeugt werden kann. Dem ersten Bauteilabschnitt 5 kommt also die Funktion eines Differenzdruckerzeugers zu.

Wie ausgeführt, erstreckt sich im Bereich des in Fig. 1 gezeigten unteren Endes des ersten Bauteilabschnitts 5 der zweite Bauteilabschnitt 6 in Längsrichtung des Durchflusssensors 1 weg. Seine Querschnittsform ist, siehe Fig. 2, an seiner Mantelfläche gerundet, sie entspricht der Berandungsform des ersten Bauteilabschnitts 5 und damit der Form des Messkanals. Die Oberseite 10 ist ebenflächig. Sie weist eine Ausnehmung 11 auf, in die ein Sensorträger 12, an dem ein Sensor 13, bevorzugt ein mikrothermischer Sensor, angeordnet ist, eingesetzt ist. Die Geometrie der Ausnehmung 11 entspricht der Form des Sensorträgers 12, sodass dieser quasi formschlüssig in die Ausnehmung eingesetzt werden kann. Der Sensor 13 liegt zur Oberseite hin frei.

Wie Fig. 1 und Fig. 2 zeigen, übergreift das plattenförmige zweite Sensorbauteil 3 den Sensorträger 12, worüber dieser fixiert wird. An der zum Sensorträger 12 gerichteten Unterseite des zweiten Sensorbauteils 3 ist ein sich längs des Sensorträgers 12 erstreckender Messkanal 14 ausgebildet, der zum Sensorträger 12 hin offen ist. Nachdem das plattenförmige zweite Sensorbauteil 3 auf den Sensorträger 12 aufliegt, wird folglich der Messkanal 14 über den Sensorträger 12 geschlossen, sodass sich ein allseitig abgedichteter Messkanal 14 ergibt. Im Inneren dieses Messkanals 14 liegt der Sensor 13, das heißt, dass das zweite Sensorbauteil 3 derart positioniert wird, dass der Messkanal 14 genau über dem Sensor 13 liegt.

Der Messkanal 14 verläuft in der Montagestellung nun in exakter Verlängerung des in Fig. 1 gezeigten unteren Kanals 9a. Das heißt, dieser Kanal 9a mündet folglich unmittelbar in den ihn axial verlängerten Messkanal 14. Der Messkanal 14 in Verbindung mit dem Kanal 9a bilden folglich einen Bypass, in dem ein definiertes Gasvolumen strömt, das über den Sensor 13 vermessen wird. Nachdem die Querschnittsgeometrie des Kanals 9a wie auch des Messkanals 14 der Querschnittsgeometrie der anderen Kanäle 9 entspricht wie auch die Querschnitte selbst im Wesentlichen gleich sind, haben folglich alle Kanäle, seien es die Kanäle 9 oder der Kanal 9a nebst Messkanal 14, ähnliche hydraulische Geometrieverhältnisse bzw. Strömungsverhältnisse, sodass es zu keinen wesentlichen Veränderungen der Strömungsaufteilung über den zu messenden Dynamikbereich kommt. Denn der über den Kanal 9a abgezweigte Gasstrom, der im Messkanal 14 über den Sensor 13 vermessen wird, entspricht jedem einzelnen Gasstrom, der über einen der sonstigen Kanäle 9 durch den ersten Bauteilabschnitt 5 strömt.

An dieser Stelle ist jedoch darauf hinzuweisen, dass grundsätzlich aber auch die Geometrie der Kanäle 9 anders sein kann als die Geometrie des Kanals 9a und des Messkanals 14. Hierüber können etwaige nichtlineare Effekte des Sensors, sofern es sich bei diesem um einen thermischen Sensor handelt, der beispielsweise eine zunehmend abflachende Sensorkurve bei hohen Durchflüssen aufweist, zumindest teilweise kompensiert werden. Dies führt zu einer einheitlichen Messstabilität über den gesamten Dynamikbereich. Auch können die einzelnen Kanäle 9 größer sein als der Kanal 9a, jedoch sollte der Kanalquerschnitt nicht größer als das 2,5-fache des anderen Kanals betragen. Kanten und Verjüngungen sind möglichst zu vermeiden, sie sollen aber in jedem Fall so gestaltet sein, dass sich keine Ablösegebiete einstellen.

Die Kanäle insgesamt haben für den zu nutzenden Durchflussbereich stets laminare Strömungsverhältnisse, das heißt, die Reynolds-Zahl Rₑ ist ≤ 2.000, ideal ist die Reynolds-Zahl Rₑ ≤ 200. Die mittlere Strömungsgeschwindigkeit des Gases liegt bei ca. ≤ 80 m/s.

Die Summe der Querschnittsflächen der Kanäle 9 wie auch des Kanals 9a reduzieren den Gesamtströmungsquerschnitt um wenigstens 40 %. Dies ermöglicht eine ungestörte Strömungseinführung und Strömungsaufteilung, ohne dass Wirbel und Strömungen im Vorlauf sich nachteilig bemerkbar machen.

Wie bereits beschrieben, gehen sämtliche Kanäle 9 wie auch der zum Messkanal 14 führenden Kanal 9a unmittelbar von der ebenen Anströmfläche 7 des ersten Bauteilabschnitts 5 ab. Das heißt, dass die Anströmung an sämtliche Kanäle, damit also auch an den Messkanal, über den gesamten Anströmquerschnitt gleich ist, was für eine fehlerfreie Messung besonders vorteilhaft ist.

Handelt es sich bei dem Sensor 13 um einen thermischen Sensor, so sind selbstverständlich entsprechende Heizelemente und Ähnliches vorzusehen, über den Sensor wird der thermische Effekt, der durch das Heizelement verursacht wird, vermessen. Selbstverständlich sind stets entsprechende Anschlussmittel vorgesehen, die ein Abgreifen des aufgenommenen Messsignals ermöglichen, um die Messsignale dann geeignet verarbeiten zu können.

Der Sensorträger 12 besitzt auf der rückwärtigen, dem Messkanal 14 abgewandten Fläche entsprechende elektronische Bauteile, die zum Beispiel per SMD-Technik bestückt werden können. Diese sind in der entsprechend ausgeformten Aufnahme 11 aufgenommen, wo sie über geeignete Verbindungselemente mit einer Auswerteeinheit und Ähnlichem gekoppelt werden. Für einen Druckausgleich kann dieser Rückraum von der Ausgangsseite her belüftet werden, wofür bei Bedarf eine geeignete Nut oder Ähnliches in diesen Raum von der Stirnseite des zweiten Bauteilabschnitts 6 her geführt werden kann. Wie Fig. 1 im Detail zeigt, besteht über eine untere, in die Aufnahme 11 führende Möglichkeit der entsprechenden Kontaktierung des Sensorträgers.

Am Sensorträger respektive der gesamten Sensoreinheit sind bei Bedarf auch entsprechende Elemente zur Speicherung, zum Beispiel ein EEPROM, oder zur Kennzeichnung wie ein Barcode oder dergleichen vorgesehen, die die Datenspeicherung wie auch einen etwaigen individuellen Abgleich der Sensoreinheit ermöglichen. Hierüber können fernern auch individuelle Kalibierdaten an eine angeschlossene Auswerteeinheit zu übertragen respektive grundsätzlich einen Datenaustausch zu ermöglichen. Dies ermöglicht es, den Sensorträger auch nachträglich in den Drucksensor einzusetzen, ohne den Sensor nochmals aufwändig zu kalibrieren.

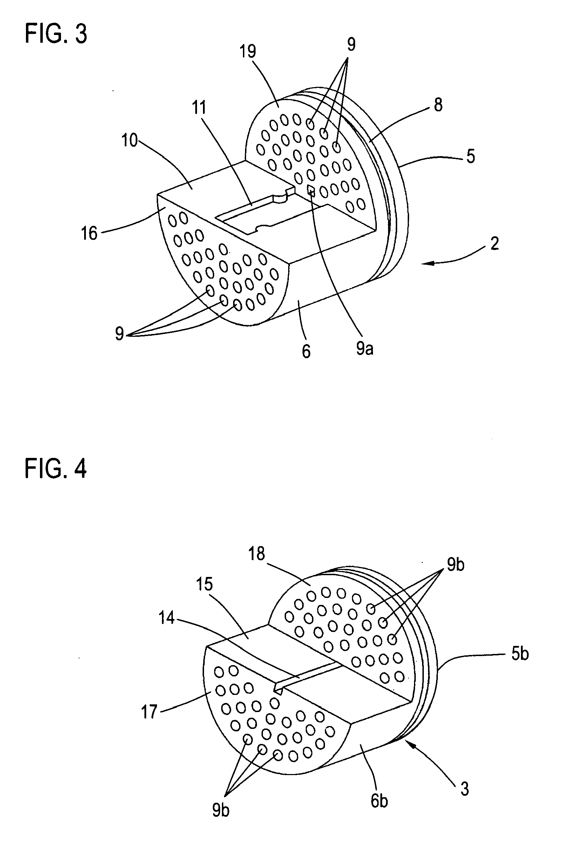

Die Fig. 3 - 6 zeigen einen erfindungsgemäßen Durchflusssensor 1 einer zweiten Ausführungsform. Auch dieser weist ein erstes Sensorbauteil 2 auf, umfassend wiederum einen ersten Bauteilabschnitt 5, der wie auch der Bauteilabschnitt 5 der zuvor beschriebenen Ausführungsform eine Vielzahl einzelner Kanäle 9 aufweist, die ihn durchsetzen. Bei dieser Ausführungsform ist jedoch der zweite Bauteilabschnitt 6 wesentlich stärker ausgeführt als bei der zuvor beschriebenen Ausführungsform, er erstreckt sich, querschnittlich gesehen, über genau die Hälfte der Fläche des ersten Bauteilabschnitts 5. Wiederum ist er an seiner Außenseite rundlich ausgeführt. Ersichtlich erstrecken sich die Kanäle 9 in der unteren Hälfte des ersten Bauteilabschnitts 5 unmittelbar auch durch den zweiten Bauteilabschnitt 6. Das heißt, dass an diesem Sensorbauteil 2 also kürzere Kanäle 9 im oberen Bauteilabschnitt und längere Kanäle 9 im unteren Bauteilabschnitt vorgesehen sind. Vorgesehen ist wiederum eine radiale Nut 8 zur Aufnahme einer Dichtung wie auch eine Ausnehmung 11 zur Aufnahme des Sensorträgers.

Ferner ist auch hier ein ausgezeichneter Kanal 9a vorgesehen, der im gezeigten Ausführungsbeispiel querschnittlich gesehen viereckig ist, während die anderen Kanäle 9 rundlichen Querschnitts sind. Dieser Kanal 9a ist derjenige, der, wie nachfolgend noch beschrieben wird, unmittelbar in den Messkanal übergeht.

Fig. 4 zeigt das zweite Sensorbauteil 3, das im Längsschnitt gesehen genau so aufgebaut ist wie das erste Sensorbauteil 2, beide weisen also einen im Längschnitt gesehen L-förmigen Querschnitt auf. Vorgesehen ist ebenfalls ein entsprechender scheibenförmiger Bauteilabschnitt 5b, der ebenfalls mit einer Vielzahl von Kanälen 9b durchsetzt ist. Er weist ebenfalls einen zweiten Bauteilabschnitt 6b auf, der sich axial davon wegerstreckt und außenseitig ebenfalls rundlich ausgeführt ist. Durch diesen erstrecken sich ebenfalls die Kanäle 9b vom ersten Bauteilabschnitt 5b herkommend. Die ebene Fläche 15 des zweiten Bauteilabschnitts 6b ist mit einem längs laufenden Messkanal 14 versehen.

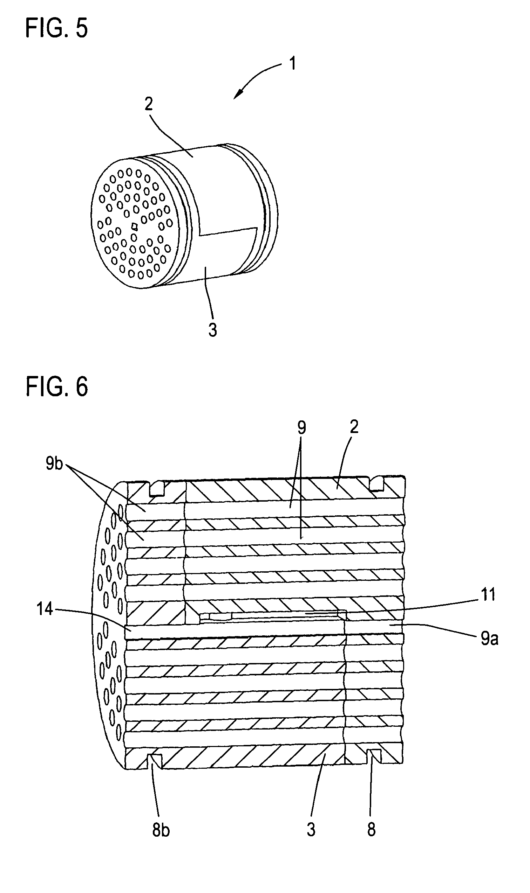

In der Montagestellung, die in den Fig. 5 und 6 gezeigt ist, werden die beiden Sensorbauteile 2, 3 nun so miteinander verbunden, dass sie sich zu einer zylindrischen Form ergänzen, das heißt, dass die beiden Flächen 10 und 15 aufeinander gelegt werden, die jeweiligen Stirnflächen 16 und 17 laufen gegen die jeweiligen Gegenflächen 18 bzw. 19 an den ersten Bauteilabschnitten 5 bzw. 5b. Die jeweilige Positionierung der Kanäle 9 bzw. 9b wie auch des Kanals 9a und des Messkanals 14 ist nun derart, dass sich in der Montagestellung automatisch sämtliche Kanäle in fluchender Positionierung zueinander befinden. Das heißt, dass jeder Kanal 9 in einen Kanal 9b mündet, wie auch der Kanal 9a unmittelbar in den im Querschnitt ebenfalls rechteckigen Messkanal 14 mündet. Bei dieser Erfindungsausgestaltung sind damit sämtliche Kanäle gleich lang, da sämtliche Kanäle den Durchflusssensor in seiner gesamten Länge durchsetzen.

Dieser zylindrische Durchflusssensor 1 kann ohne Weiteres in eine zylindrische Messstrecke eingesetzt werden, wo er aufgrund seiner geschlossenen Zylinderform auch sicher fixiert ist. Die Abdichtung erfolgt über die in der Nut 8 am ersten Sensorbauteil 2 und in der Nut 8b am zweiten Sensorbauteil 3 aufzunehmenden Dichtringe.

Selbstverständlich sind die beiden Sensorbauteile 2, 3 über geeignete Verbindungsmittel aneinander befestigt, wenngleich diese hier nicht im Detail dargestellt sind. Denkbar ist beispielsweise ein Verkleben der Bauteile über die plan aufeinander liegenden Flächen 10 und 15, wie natürlich aber auch die Möglichkeit besteht, beide mittels entsprechender Schrauben oder Ähnlichem von den beiden ersten Bauteilabschnitten 5 und 5b her zu verschrauben.

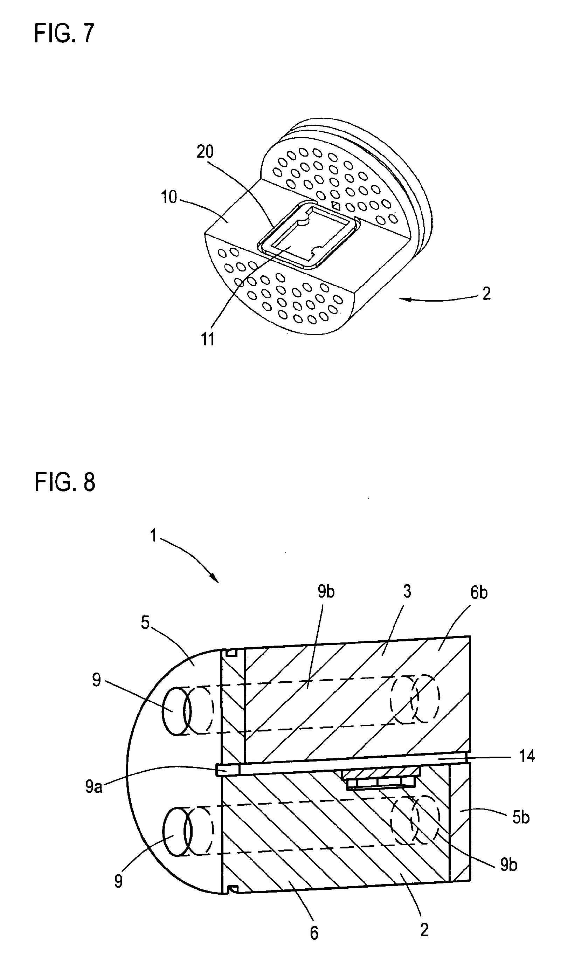

Fig. 7 zeigt eine alternative Ausführungsform eines ersten Sensorbauteils 2 für einen Durchflusssensor 1, wie er in den Fig. 3 - 6 bereits gezeigt ist. Der Aufbau dieses ersten Sensorbauteils 2 entspricht dem, wie er in Fig. 3 gezeigt ist. Zusätzlich ist hier jedoch eine Aufnahmenut 20 in die Fläche 10 eingearbeitet, die um die Aufnahme 11 herum läuft. In dieser Aufnahmenut 20 kann ein Dichtring oder dergleichen angeordnet werden, über den nach Aufsetzen des zweiten Sensorbauteils 3 eine direkte Abdichtung zur gegenüberliegenden Fläche 15 erreicht wird. Hierüber wird eine etwaige Spaltströmung zwischen den beiden Sensorbauteilen 2 und 3 verhindert.

Schließlich zeigt Fig. 8 noch eine dritte Ausführungsform eines erfindungsgemäßen Durchflusssensors 1, der wiederum aus zwei Sensorbauteilen 2, 3 besteht, die - ähnlich wie die Sensorbauteile 2, 3 der Ausführungsbeispiele gemäß der Fig. 3 - 7 - querschnittlich gesehen im Wesentlichen L-förmig sind und jeweils aus einem ersten Bauteilabschnitt 5 bzw. 5b und einem jeweiligen zweiten Bauteilsabschnitt 6 bzw. 6b bestehen. In der in Fig. 8 im Längsschnitt gezeigten Montagestellung ergänzen sich die beiden Sensorbauteile 2, 3 wiederum zu der bereits aus Fig. 5 bekannten Zylinderform.

Bei dieser Erfindungsausgestaltung sind anstelle der Vielzahl der einzelnen Kanäle 9 bzw. 9b nur vier Kanäle 9 bzw. 9b, die hier nur gestrichelt gezeichnet sind, vorgesehen, wobei in der Längsschnittansicht nur zwei jeweilige Kanäle gezeigt sind. Vorgesehen ist wiederum der Kanal 9a, der unmittelbar in den Messkanal 14 mündet. Bei dieser Erfindungsausgestaltung ist jedoch der Querschnitt der jeweiligen Kanäle 9, 9b wesentlich größer als der Querschnitt des Kanals 9a und des Messkanals 14, wie auch die Kanalgeometrie unterschiedlich ist.

Allen erfindungsgemäßen Ausgestaltungen gemein ist jedoch, dass die Strömungsaufteilung in die Hauptgasströme, die über die Kanäle 9 bzw. 9 und 9b strömen, und den Messgasstrom, der über den Kanal 9a und den Messkanal 14 strömt, immer in derselben Ebene, nämlich der Ebene der Anströmfläche 7 des ersten Bauteilabschnitts 5 des ersten Sensorbauteils 2, erfolgt.

## Patentansprüche

1. Durchflusssensor zum Einsetzen in eine Messstrecke zur Erfassung eines in der Messstrecke geführten Fluidflusses, umfassend ein erstes Sensorbauteil (2) mit einem ersten Bauteilabschnitt (5), der eine der Querschnittsform der Messstrecke entsprechende, vorzugsweise runde Form besitzt und mehrere einzelne das Fluid führende Kanäle (9, 9a) aufweist, wobei die Fluideintrittsfläche (7) des ersten Bauteilabschnitts (2) in der Montagestellung senkrecht zur Fluidströmungsrichtung steht sowie wenigstens einen Sensorträger (12) nebst mindestens einem Sensor (13), wobei der Sensor (13) einem Messkanal (14) zugeordnet ist, der in Verbindung mit einem am ersten Sensorbauteil (2) ausgebildeten Kanal (9a) steht und wobei am ersten Sensorbauteil (2) ein zweites Sensorbauteil (3) angeordnet ist, wobei der Sensorträger (12) an einem der Sensorbauteile (2, 3) oder zwischen beiden Sensorbauteilen (2, 3) angeordnet ist.

2. Durchflusssensor Anspruch 1, **dadurch gekennzeichnet, dass** der wenigstens eine Messkanal (14) in axialer Verlängerung des Kanals (9a) verläuft.

3. Durchflusssensor nach Anspruch 1 oder 2, **dadurch gekennzeichnet, dass** sich vom ersten Bauteilabschnitt (5) des ersten Sensorbauteils (2) im wesentlichen senkrecht dazu ein zweiter Bauteilabschnitt (6) erstreckt, an dem das zweites Sensorbauteil (3) befestigt ist.

4. Durchflussmesser nach einem der Ansprüche 1 bis 3, **dadurch gekennzeichnet, dass** der Sensorträger (12) zusammen mit dem am ersten Sensorbauteil (2) befestigten zweiten Sensorbauteil (3) zumindest abschnittsweise den wenigstens einen Messkanal (14) begrenzt.

5. Durchflusssensor nach Anspruch 4, **dadurch gekennzeichnet, dass** mehrere Messkanäle (14) vorgesehen sind, die jeweils über einen separaten Sensorträger (12) und das zweite Sensorbauteil (3) begrenzt sind, oder die über einen gemeinsamen Sensorträger (12) und das zweite Sensorbauteil (3) begrenzt sind.

6. Durchflusssensor nach Anspruch 4 oder 5, **dadurch gekennzeichnet, dass** am ersten oder am zweiten Bauteilabschnitt (5, 6) eine Aufnahme (11) für den Sensorträger (12) vorgesehen ist, derart, dass der Sensorträger (12) mit seiner den Messkanal (14) begrenzenden Fläche zum zweiten oder zum ersten Sensorbauteil (3, 2) weisend anbringbar ist.

7. Durchflusssensor nach einem der Ansprüche 1 bis 6, **dadurch gekennzeichnet, dass** das zweite Sensorbauteil (3) im wesentlichen plattenförmig ist.

8. Durchflusssensor nach einem der Ansprüche 1 bis 6, **dadurch gekennzeichnet, dass** sich das zweite Sensorbauteil (3) und das erste Sensorbauteil (2) in der Montagestellung zu einer geschlossenen, der Querschnittsform der Messstrecke entsprechenden Form, insbesondere zylindrischen Form ergänzen, wobei am zweiten Sensorbauteil (3) die am ersten Bauteilabschnitt (5) vorgesehenen Kanäle (9) weiterführende Kanäle (9b) ausgebildet sind.

9. Durchflusssensor nach einem der vorangehenden Ansprüche, **dadurch gekennzeichnet, dass** am ersten Bauteilabschnitt (5) in gitterartiger Anordnung eine Vielzahl von Kanälen (9, 9a) vorgesehen sind, wobei der Kanal (9a), der in den Messkanal (14) übergeht, als einzelner Kanal (9a) unmittelbar benachbart zum zweiten Bauteilabschnitt (6) verläuft.

10. Durchflusssensor nach einem der Ansprüche 1 bis 8, **dadurch gekennzeichnet, dass** am ersten Bauteilabschnitt (5) eine Vielzahl einzelner Kanäle (9), in vorzugsweise symmetrischer Verteilung, um die Mitte des ersten Bauteilabschnitts (5) angeordnet sind, und dass der in den Messkanal (14) übergehenden Kanal (9a) in der Mitte angeordnet ist.

11. Durchflusssensor nach einem der vorangehenden Ansprüche, **dadurch gekennzeichnet, dass** die Querschnittsfläche und/oder die Querschnittsform aller Kanäle (9, 9a, 9b) und des Messkanals (14) im wesentlichen gleich ist.

12. Durchflusssensor nach einem der vorangehenden Ansprüche, **dadurch gekennzeichnet, dass** die Länge und der Querschnitt der Kanäle (9, 9a) derart ausgebildet ist, dass sich ein laminares Strömungsprofil ausbildet.

13. Durchflusssensor nach einem der vorangehenden Ansprüche, **dadurch gekennzeichnet, dass** der Fluideintrittsfläche (7) eine umlaufende Aufnahme für ein Dichtelement oder ein in einer solchen Aufnahme angeordnetes Dichtelement, das in der Montagestellung zur Messstrecke hin abdichtet, zugeordnet ist.

14. Durchflusssensor nach einem der vorangehenden Ansprüche, **dadurch gekennzeichnet, dass** der Sensor (13) ein thermischer Sensor ist.

15. Zähler, insbesondere Gaszähler, umfassend einen Durchflusssensor nach einem der vorangehenden Ansprüche.
